# EUROPÄISCHE PATENTSCHRIFT

(11) **EP 1 634 774 B1**
(45) Veröffentlichungstag und Bekanntmachung des Hinweises auf die Patenterteilung: **01.08.2007**
(21) Anmeldenummer: 05019640.1
(22) Anmeldetag: 09.09.2005
(51) Int. Cl.: B60R 9/06

(54) **Lastenträger für einklappbare Anhängekupplung**
Load carrier for retractable hitch
Porte-charge pour un dispositif d'attelage rétractable

(30) Priorität: 10.09.2004 DE 102004044294
(43) Veröffentlichungstag der Anmeldung: 15.03.2006
(73) Patentinhaber: Bussler, Paul, 59510 Lippetal-Herzfeld (DE)
(72) Erfinder: Bussler, Paul, 59510 Lippetal-Herzfeld (DE)
(74) Vertreter: Graefe, Jörg

(56) Entgegenhaltungen:
- EP-A- 1 170 178
- WO-A-98/09841
- DE-A1- 10 208 163
- DE-U1- 8 709 912
- DE-U1- 9 404 236

## Beschreibung

Die Erfindung betrifft eine Vorrichtung zum Transport von Lasten an Fahrzeugen mit Kugelkopfkupplungen.

Aus der Druckschrift mit der Veröffentlichungsnummer DE 43 37 006 A1 ist eine Vorrichtung zum Transport von Lasten an Kraftfahrzeugen bekannt. Diese weist ein an der Rückseite eines Fahrzeuges angebrachten Träger für jedwede Art von Lasten bestehend aus einem horizontalen Tragarm auf, der in seiner Länge veränderbar ist und aus einem Hohlprofil besteht, das entweder durch teleskopartig zu dem Tragarm verschiebbaren Hohlprofilen oder durch profilgleiche Hohlprofile, die an den Tragarm angesetzt sind, verlängerbar ist. Die in der Druckschrift beschriebene Vorrichtung weist ein Gehäuse auf, in welchem ein Kugelkopf einer Kugelkopfkupplung aufgenommen werden kann. Über ein Klemmmittel kann die Vorrichtung an dem Kugelkopf festgeklemmt werden, die die Vorrichtung zum Transport der Lasten an einem Fahrzeug beziehungsweise an der Kugelkopfkupplung eines Fahrzeugs zu befestigen. Die Klemmmittel umfassen dabei eine an der Kugelkopfkupplung beziehungsweise an dem Hals der Kugelkopfkupplung befestigtes erstes Teil, ein Spannhaken, der an diesem ersten Teil einhakt und mittels einer Spannschraube mit dem ersten Teil verspannt werden kann und Stützen, die sich auf dem ersten Teil abstützen und andererseits mit dem Tragarm des Trägers verbunden sind. Die Vorrichtung, wie sie aus der genannten Druckschrift bekannt ist, hat sich in der Vergangenheit bewährt. Sie ist einfach zu montieren und weist eine gegenüber anderen vergleichbaren Vorrichtungen große Tragkraft auf.

Aus der DE 94 04 236 U ist eine fathungsgemäße vorrichtung bekannt. Bei moderneren Kraftfahrzeugen werden vielfach Kugelkopfkupplungen serienmäßig auf der Unterseite des Fahrzeugs als herausklappbare Bauteile vorgesehen. Derartige Kupplungen können während einer Fahrt ohne einen Anhänger oder einer angeschlossenen Vorrichtung zum Transport von Lasten eingeklappt auf der Unterseite des Kraftfahrzeugs verstaut werden. Über einen Auslösehebel können sie jedoch ausgeklappt werden, um einen Anhänger an das Fahrzeug anzuhängen oder aber eine Vorrichtung zum Tragen von Lasten anzuschließen. Die aus dem vorbeschriebenen Stand der Technik bekannte Vorrichtung kann grundsätzlich auch an eine solche aus dem Stand der Technik bekannte Kugelkopfkupplung angeschlossen werden. Dazu muss jedoch nach jedem Ausklappen das erste Teil, welches an dem Hals der Kugelkopfkupplung angebracht wird, an der Kugelkopfkupplung befestigt werden. Vor dem Einklappen muss dieses erste Teil demontiert werden. Die ständige Montage und Demontage nach beziehungsweise vor dem Einklappen der Kupplung ist zeitraubend und wenig komfortabel.

Ein Nachteil der in dem Stand der Technik beschriebenen Vorrichtung ist ferner, dass die Spannschraube, beziehungsweise eine Handhabe der Spannschraube nach der Montage der Vorrichtung frei zugänglich und nicht gegen unbeabsichtigtes Losdrehen gesichert ist.

Der Erfindung zugrunde liegende Aufgabe besteht demnach darin, eine Vorrichtung der eingangs genannten Art so weiterzubilden, dass eine Handhabe zum Anziehen beziehungsweise Lösen des Klemmmittels nach der Montage unbeabsichtigte Betätigung gesichert ist.

Diese Aufgabe wird insbesondere durch eine Vorrichtung nach Anspruch 1 gelöst, bei der eine Handhabe zum Anziehen oder Lösen des Klemmmittels in einem vollständig montierten Zustand der Vorrichtung unzugänglich ist und so gegen unbeabsichtigtes Lösen gesichert ist.

Das Gehäuse einer der erfindungsgemäßen Vorrichtungen kann im montierten Zustand der Vorrichtung den Kugelkopf übergreifen.

Eine erfindungsgemäße Vorrichtung kann Einstellschrauben zum Einstellen der Ausrichtung der Vorrichtung zum Fahrzeug aufweisen. Mit einer Stellschraube könnte dabei beispielsweise die Neigung der Vorrichtung relativ zu einer horizontalen Fahrzeugebene einstellbar sein. Die gleiche Stellschraube kann auch einer verbesserten Krafteinleitung von der Vorrichtung in die Kupplung, insbesondere in den Hals der Kupplung dienen, so dass nicht alle Kräfte über den Kugelkopf in die Kugelkopfkupplung eingeleitet werden müssen. Diese Stellschraube ist so angeordnet, dass sie nicht unmittelbar unterhalb des Kugelkopfes am Hals der Kupplung angreift, sondern dass zwischen Kugelkopf und Angriffspunkt der Stellschraube ein Abstand verbleibt. Der Abstand kann dabei vorteilhaft so gewählt werden, dass der Angriffspunkt möglichst in einem oder unmittelbar oberhalb des Bereichs liegt, in dem der Hals der Kupplung in Fahrtrichtung nach vorne abknickt. Liegt der Angriffspunkt in diesem Bereich, sind Scherkräfte, die ein Abreißen des Kugelkopfes vom Hals der Kupplung bewirken könnten, vermindert. Eine oder zwei weitere Stellschrauben können dafür vorgesehen sein, die Ausrichtung der Vorrichtung relativ zur Fahrtrichtung des Fahrzeugs einzustellen. Auch diese Stellschrauben können grundsätzlich die Krafteinleitung der Kraft von der erfindungsgemäßen Vorrichtung in die Kupplung verbessern.

Bei einer erfindungsgemäßen Vorrichtung kann eine erste Klemmbacke der vorgesehenen Klemmbacken fest mit dem Gehäuse verbunden sein. Dagegen kann eine zweite Klemmbacke vorzugsweise in eine erste Richtung senkrecht zur ersten Klemmbacke verschoben werden. Die Klemmbacken oder Teile der Klemmbacken sind vorteilhaft zumindest teilweise auswechselbar, um bei Verschleiß oder Beschädigung durch unsachgemäße Krafteinwirkung erneuert zu werden.

Die zweite Klemmbacke einer erfindungsgemäßen Vorrichtung ist vorteilhaft an einem ersten Ende einer Spindel angebracht. Die Spindel kann drehbar gelagert sein und durch axiale Drehung in der ersten Richtung verschiebbar sein.

An dem zweiten Ende der Spindel kann eine Gabel angebracht sein. Die Gabel kann mit einer Handhabe zum Lösen oder Anziehen des Feststellmittels verbunden sein.

Eine erfindungsgemäße Vorrichtung kann vorteilhaft ein auf das Gehäuse aufsteckbares Hohlprofilstück umfassen. Ein derartiges Hohlprofilstück nimmt im vollständig montierten Zustand der Vorrichtung die Handhabe und die damit fest verbundenen Elemente vollständig auf. Im vollständig montierten Zustand kann somit nicht mehr auf die Handhabe oder damit verbundene Teile zugegriffen werden. Damit ist die Handhabe gegen unbeabsichtigte Bedienung gesichert.

Die Handhabe, die Gabel und/oder die Spindel können im vollständig montierten Zustand der Vorrichtung unverdrehbar in dem Hohlprofilstück aufgenommen sein. Dieses weitere Merkmal sichert ein Lösen des Klemmmittels, zum Beispiel aufgrund von Erschütterungen der erfindungsgemäßen Vorrichtung während der Fahrt, die zu einem Lockern des Klemmmittels führen könnten.

Ein Ausführungsbeispiel für eine erfindungsgemäße Vorrichtung zum Transport von Lasten an Fahrzeugen mit Kugelkopfkupplungen ist in der Zeichnung näher beschrieben. Darin zeigt
- Fig. 1: eine perspektivische Darstellung eines ersten Teils der erfindungsgemäßen Vorrichtung,
- Fig. 2: eine Seitenansicht des ersten Teils,
- Fig. 3: einen Schnitt entlang der Linie III-III in Fig. 2,
- Fig. 4: eine perspektivische Darstellung des Gehäuses mit einer ersten Klemmbacke des ersten Teils der erfindungsgemäßen Vorrichtung,
- Fig. 5: eine Draufsicht auf das Gehäuse gemäß Fig. 4,
- Fig. 6: einen Schnitt gemäß der Linie VI-VI in Fig. 5 und
- Fig. 7: eine Frontansicht der Vorrichtung gemäß dem Pfeil VII in Fig. 6.

Eine erfindungsgemäße Vorrichtung kann das erste Teil aufweisen, wie es in der Zeichnung dargestellt ist. Zusätzlich dazu kann eine erfindungsgemäße Vorrichtung weitere Teile umfassen, die zwar nicht in der Zeichnung dargestellt sind, jedoch kurz erläutert werden.

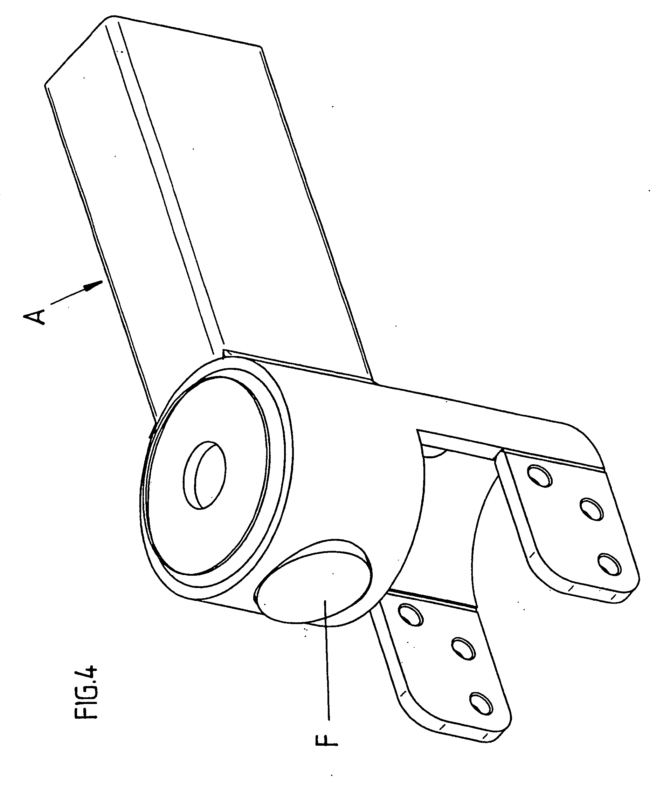

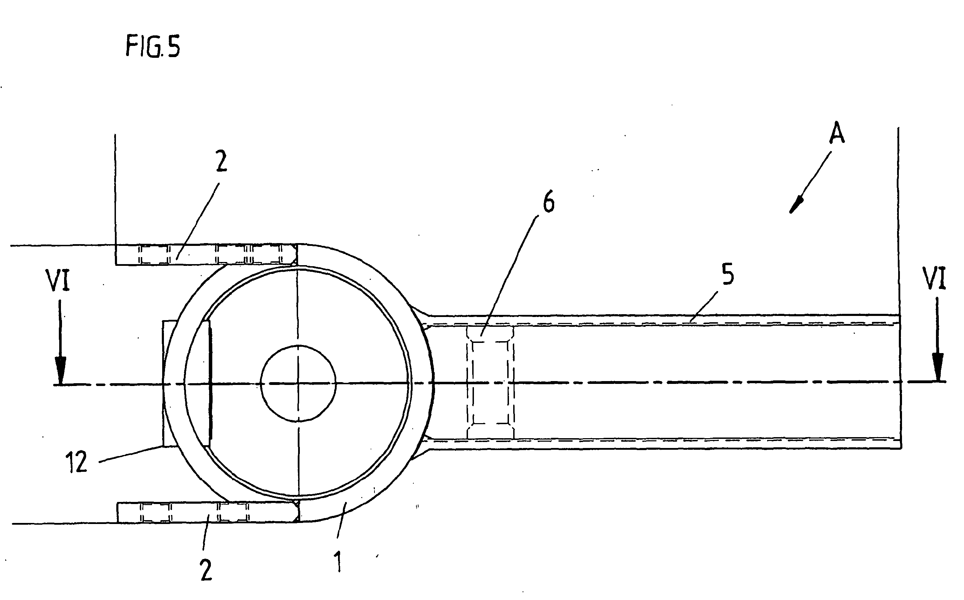

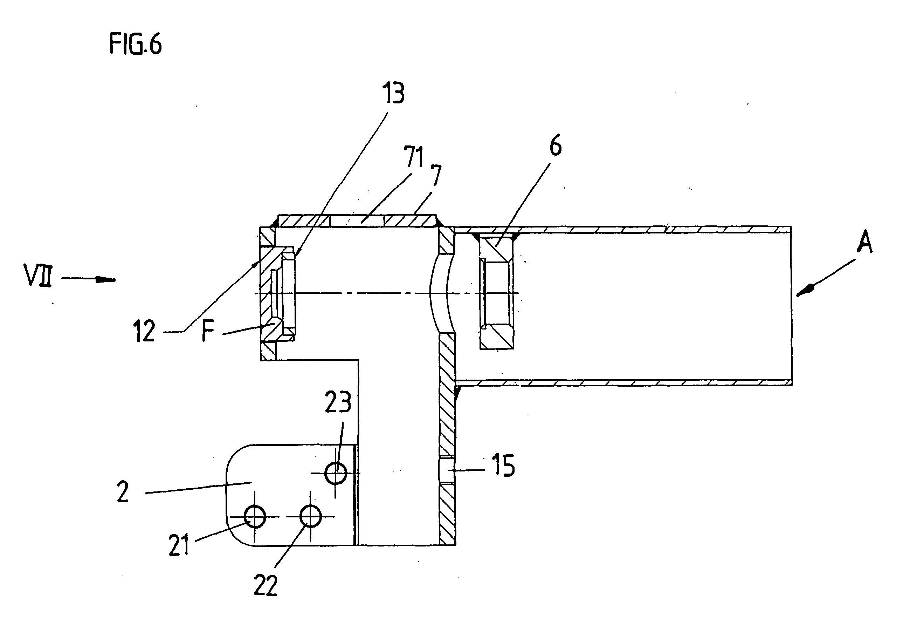

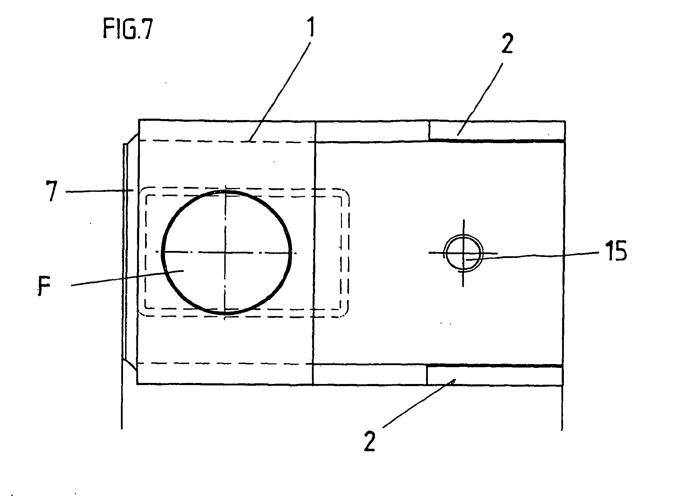

Das erste Teil einer erfindungsgemäßen Vorrichtung weist ein Gehäuse A auf, welches zunächst anhand der Figuren 4 bis 7 näher erläutert werden soll.

Das Gehäuse A dient zum einen der Aufnahme eines Kugelkopfs K einer Kugelkopfkupplung, an welcher eine erfindungsgemäße Vorrichtung angebracht werden kann. Ferner nimmt das Gehäuse ein Feststellmittel B, C, D, E und F auf. Darüber hinaus dient es der Verbindung mit den weiteren in der Zeichnung nicht dargestellten Teilen der erfindungsgemäßen Vorrichtung.

Das Gehäuse selbst ist aus mehreren Elementen 1, 2, 5, 6, 7 zumeist durch stoffschlüssige Verbindung, insbesondere Schweißen, zusammengesetzt. Ein erstes Element 1 ist in einem oberen Abschnitt hülsenartig ausgebildet, an den sich nach unten ein unterer Abschnitt anschließt, welcher die Fortsetzung eines Teils der Wandung des oberen Abschnitts bildet. Der Durchmesser des hülsenartigen Abschnitts des ersten Elements ist so bemessen, dass er geringfügig größer ist als der Durchmesser eines Kugelkopfs einer Kugelkopfkupplung. Im montierten Zustand umschließt der obere hülsenartige Abschnitt des ersten Elements den Kugelkopf K vollständig. Die obere Stirnseite des hülsenartigen Abschnitts ist mit einem Deckel 7 verschlossen, der eine zentrale Bohrung 71 aufweist.

In dem hülsenartigen Abschnitt des ersten Elements 1 sind zwei diametral gegenüberliegende Bohrungen vorgesehen. In der in Montagerichtung vorne liegenden Bohrung ist eine erste Klemmbacke F eingesetzt. Diese erste Klemmbacke F ist zweiteilig aufgebaut und umfasst ein erstes Klemmbackenteil 12, welches fest mit dem ersten Element 1 des Gehäuses A verbunden ist und ein zweites Klemmbackenelement 13, welches lösbar an dem ersten Klemmbackenelement 11 angebracht ist. Dieses zweite Klemmbackenelement 13 ist als Ring ausgeführt, der sich spielfrei beim Anziehen des Klemmmittels an den Kugelkopf K der Kupplung anlegt.

An den hülsenartigen Abschnitt des ersten Elements 1 schließt sich gegenüberliegend zur ersten Klemmbacke F ein Stutzen 5 an. Der Stutzen 5 erstreckt sich im rechten Winkel von der äußeren Wandung des hülsenartigen Abschnitts radial nach außen. Der Stutzen 5, der im Querschnitt ein Rechteckhohlprofil hat, weist im Inneren ein Element 6 mit einem axial zur Bohrung angeordnetem Innengewinde auf. Bei dem Element kann es sich beispielsweise um eine Mutter handeln, die unverdrehbar im Inneren des Stutzens 5 angebracht ist.

An den unteren Abschnitt des ersten Elements 1 sind nach vorne ragende Laschen 2 parallel zueinander angeordnet. In diesen Laschen sind verschiedene Bohrungen 21, 22, 23 vorgesehen.

Darüber hinaus ist in dem unteren Abschnitt des ersten Elements 1 des Gehäuses A eine Gewindebohrung 15 vorgesehen, die im rechten Winkel zu den Bohrungen 21, 22, 23 in den Laschen 2 ausgerichtet ist.

In dem mit dem Innengewinde versehenen Element 6, welches in dem Stutzen 5 des Gehäuses A angebracht ist, ist eine Spindel B drehbar gelagert. Die Spindel B ist zweiteilig aufgebaut und besteht aus einer Gewindestange 10 und einer Hülse 11, wobei die Hülse 11 ein Außengewinde aufweist, welches in das Innengewinde des Elements 6 des Gehäuses A eingeschraubt ist. Daneben weist die Hülse 11 ein Innengewinde auf, welches sich in einem zur Rückseite der Vorrichtung gewandten Abschnitt der Hülse 11 erstreckt. In dieses Innengewinde ist die Gewindestange 10 eingeschraubt. Von der Vorderseite ist in die Hülse 11 die zweite Klemmbacke E eingesetzt. Die zweite Klemmbacke E ist dabei im Wesentlichen als Vollzylinder ausgeführt, weist jedoch auf der zur Vorderseite der Vorrichtung gewandten Stirnfläche eine kalottenförmige Vertiefung auf.

Die zweite Klemmbacke E und die gegenüberliegende erste Klemmbacke F sind Teil des Klemmmittels, mit welchem die Vorrichtung an der Kugelkopfkupplung angeschlossen wird. Im Weiteren gehören zu dem Klemmmittel die zweiteilige Spindel B, eine mit der Spindel B gelenkig verbundene Gabel C sowie eine fest mit der Gabel verbundene Handhabe D in Form eines Griffrohres. Die gelenkige Verbindung zwischen der Gewindestange 10 der Spindel B und der Gabel C ist dabei im übrigen über einen Bolzen 14 und eine Querbohrung am Ende der Gewindestange 10 der Spindel hergestellt. Über ein Verdrehen der Spindel mittels der Handhabe D kann die zweite Klemmbacke E in Richtung auf die erste Klemmbacke F verschoben werden oder aber von der ersten Klemmbacke F weg bewegt werden. Je nachdem wird das Klemmmittel angezogen oder gelöst.

Zur Montage der erfindungsgemäßen Vorrichtung wird das erste Teil der Vorrichtung mit dem ersten Element 1 des Gehäuses A über den Kugelkopf K der Kugelkopfkupplung gestülpt. Anschließend wird über die Handhabe D das Klemmmittel angezogen, um den ersten Teil der Vorrichtung fest mit der Kugelkopfkupplung zu verbinden.

Grundsätzlich ist es möglich, die erfindungsgemäße Vorrichtung beziehungsweise deren ersten Teil in unterschiedlichen Ausrichtungen zu dem Fahrzeug auszurichten. Um einerseits eine Position beziehungsweise Ausrichtung des ersten Teils der Vorrichtung zum Fahrzeug vorzugeben und andererseits eine Krafteinleitung von der Vorrichtung in die Kugelkopfkupplung zu verbessern, können Stellschrauben vorgesehen sein (nicht dargestellt). Diese Stellschrauben können einerseits in die Bohrungen 21, 22, 23 der Laschen 2 eingesetzt werden, um die seitliche Ausrichtung der erfindungsgemäßen Vorrichtung festzulegen, andererseits kann eine Stellschraube in die Bohrung 15 eingeschraubt werden, um die Neigung der erfindungsgemäßen Vorrichtung zu einer horizontalen Ebene des Fahrzeugs festzulegen. Die Stellschrauben durchgreifen dabei die Gewindebohrungen 21, 22, 23, beziehungsweise 15 und die Enden der Stellschrauben liegen an dem unterhalb des Kugelkopfs K befindlichen Hals der Kugelkopfkupplung an, wodurch die auf die erfindungsgemäße Vorrichtung wirkenden Kräfte auch in den Hals der Kugelkopfkupplung geleitet werden können.

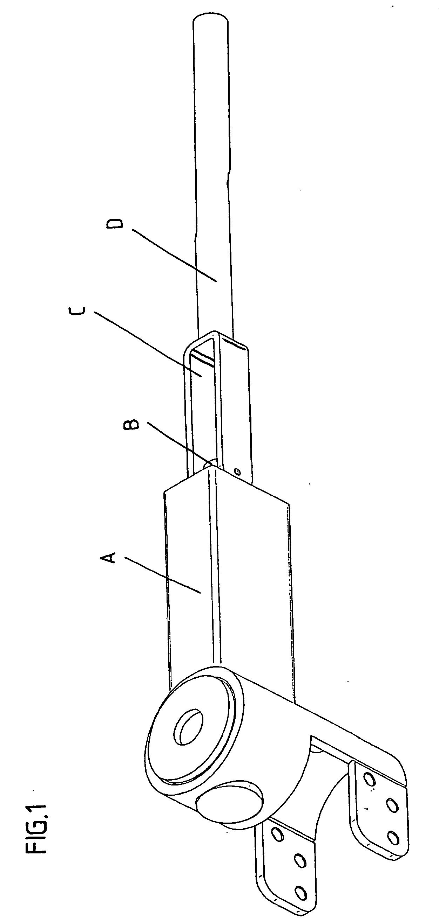

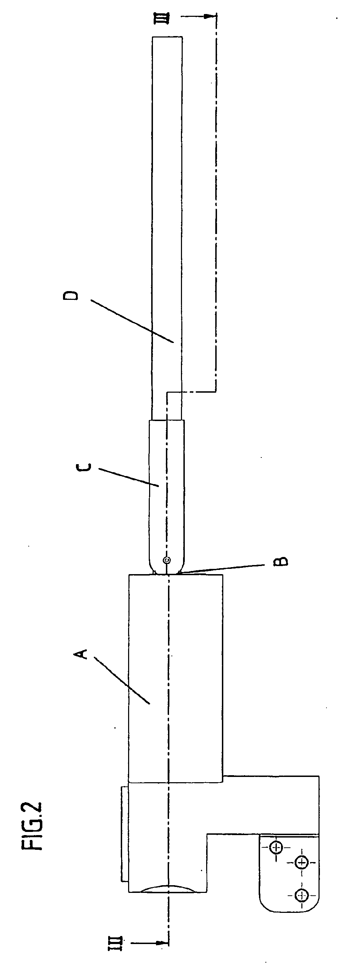

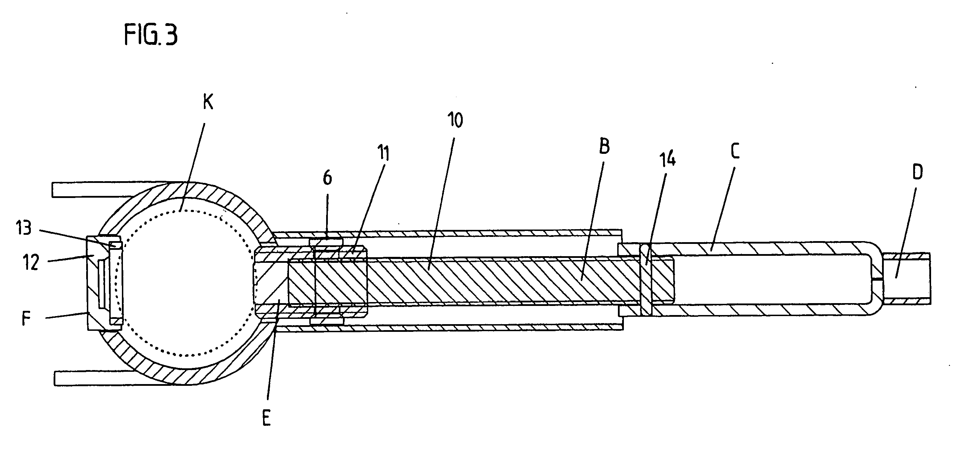

Die erfindungsgemäße Vorrichtung, zu der das in den Figuren 1 bis 7 dargestellte erste Teil gehört, weist ein zweites Teil auf, welches ein auf den Stutzen 5 des Gehäuses A aufsteckbares Hohlprofilstück ist. Dieses Hohlprofilstück hat einen rechteckförmigen Querschnitt mit inneren Abmessungen, die den äußeren Abmessungen des Stutzens 5 des Gehäuses A entsprechen. Das Hohlprofilstück wird nach erfolgter Befestigung des ersten Teils an der Kupplung über die Handhabe D, die Gabel C auf den Stutzen 5 des Gehäuses A aufgeschoben. Nach dem Aufschieben umschließt es den Stutzen 5 des Gehäuses A, die Gabel und die Handhabe D, so dass insbesondere die Handhabe D nicht mehr für einen Bediener zugänglich ist. Auf dem Hohlprofilstück werden unter Zuhilfenahme weiterer Teile der erfindungsgemäßen Vorrichtung die zu transportierenden Lasten befestigt.

Die Handhabe D oder die Gabel C haben äußere Abmessungen, die verhindern, dass die Handhabe in dem Hohlprofilstück axial gedreht werden kann, beziehungsweise sich selbsttätig axial dreht. Damit ist verhindert, dass sich das Klemmmittel von selbst ohne die Einwirkung eines Bedieners löst, was beispielsweise durch andauernde Erschütterung der erfindungsgemäßen Vorrichtung der Fall sein kann.

## Patentansprüche

1. Vorrichtung zum Transport von Lasten an Fahrzeugen mit Kugelkopfkupplungen
- mit einem Gehäuse (A) in welchem ein Kugelkopf der Kugelkopfkupplung aufnehmbar ist,
- mit einem Klemmmittel (B, C, D, E, F) mit dem die Vorrichtung an dem Kugelkopf festklemmbar ist,
**dadurch gekennzeichnet, dass**
- das Klemmmittel (B, C, D, E, F) eine Handhabe (D) zum Anziehen oder Lösen des Klemmmittels (B, C, D, E, F) umfasst, die in einem vollständig montierten Zustand der Vorrichtung unzugänglich ist und so gegen unbeabsichtigtes Lösen gesichert ist.

2. Vorrichtung nach Anspruch 1, **dadurch gekennzeichnet, dass** das Klemmmittel (B, C, D, E, F) zumindest zwei Klemmbacken (E, F) aufweist, die jeweils eine an die Form des Kugelkopfes angepasste Ausnehmung haben.

3. Vorrichtung nach Anspruch 1 oder 2, **dadurch gekennzeichnet, dass** das Gehäuse (A) im montierten Zustand der Vorrichtung den Kugelkopf übergreift.

4. Vorrichtung nach einem der Ansprüche 1 bis 3, **dadurch gekennzeichnet, dass** die Vorrichtung Einstellschrauben zum Einstellen der Ausrichtung der Vorrichtung zum Fahrzeug aufweist.

5. Vorrichtung nach Anspruch 4, **dadurch gekennzeichnet, dass** mit einer Stellschraube der Stellschrauben die Neigung der Vorrichtung relativ zu einer horizontalen Fahrzeugebene einstellbar ist.

6. Vorrichtung nach Anspruch 4 oder 5, **dadurch gekennzeichnet, dass** das mit einer oder zweien der Stellschrauben die Ausrichtung der Vorrichtung relativ zur Fahrtrichtung des Fahrzeugs einstellbar ist.

7. Vorrichtung nach Anspruch 2, **dadurch gekennzeichnet, dass** eine erste Klemmbacke (E) der Klemmbacken (E, F) zumindest teilweise fest mit dem Gehäuse (A) verbunden ist.

8. Vorrichtung nach Anspruch 7, **dadurch gekennzeichnet, dass** eine zweite Klemmbacke (F) der Klemmbacken (E, F) in eine erste Richtung senkrecht zur ersten Klemmbacke (E) verschiebbar ist.

9. Vorrichtung nach einem der Ansprüche 2 bis 8, **dadurch gekennzeichnet, dass** die Klemmbacken (F) oder Teile (13) der Klemmbacken (E) zumindest teilweise auswechselbar sind.

10. Vorrichtung nach einem der Ansprüche 8 oder 9, **dadurch gekennzeichnet, dass** die zweite Klemmbacke (F) an einem ersten Ende einer Spindel (B) angebracht ist.

11. Vorrichtung nach Anspruch 10, **dadurch gekennzeichnet, dass** die Spindel (B) drehbar gelagert ist und durch axiale Drehung in der ersten Richtung verschiebbar ist.

12. Vorrichtung nach Anspruch 10 oder 11, **dadurch gekennzeichnet, dass** an dem zweiten Ende der Spindel (B) eine Gabel (C) angebracht ist.

13. Vorrichtung nach Anspruch 12, **dadurch gekennzeichnet, dass** an der Gabel (C) die Handhabe (D) zum Lösen oder Anziehen des Feststellmittels (B, C, D, E, F) angebracht ist.

14. Vorrichtung nach Anspruch 13, **dadurch gekennzeichnet, dass** die Vorrichtung ein auf das Gehäuse (A) aufsteckbares Hohlprofilstück umfasst, welches im vollständig montierten Zustand der Vorrichtung die Handhabe (D) vollständig aufnimmt.

15. Vorrichtung nach Anspruch 14, **dadurch gekennzeichnet, dass** die Handhabe (D) die Gabel (C) und/oder die Spindel (B) im vollständig montierten Zustand der Vorrichtung unverdrehbar in dem Hohlprofilstück aufgenommen sind.

## Claims

1. Apparatus for transporting loads on vehicles having ball-type couplings,
- having a housing (A), in which a spherical head of the ball-type coupling can be received,
- having a clamping means (B, C, D, E, F), with which the apparatus can be clamped fixedly to the spherical head,
**characterized in that**
- the clamping means (B, C, D, E, F) comprises a handle (D) for tightening or releasing the clamping means (B, C, D, E, F), which handle (D) is inaccessible in a completely assembled state of the apparatus and is thus secured against unintended release.

2. Apparatus according to Claim 1, **characterized in that** the clamping means (B, C, D, E, F) has at least two clamping jaws (E, F) which in each case have a recess which is adapted to the shape of the spherical head.

3. Apparatus according to Claim 1 or 2, **characterized in that** the housing (A) reaches over the spherical head in the mounted state of the apparatus.

4. Apparatus according to one of Claims 1 to 3,
**characterized in that** the apparatus has setting screws for setting the orientation of the apparatus with respect to the vehicle.

5. Apparatus according to Claim 4, **characterized in that** the inclination of the apparatus relative to a horizontal vehicle plane can be set by way of one setting screw of the setting screws.

6. Apparatus according to Claim 4 or 5, **characterized in that** the orientation of the apparatus relative to the driving direction of the vehicle can be set by way of one or two of the setting screws.

7. Apparatus according to Claim 2, **characterized in that** a first clamping jaw (E) of the clamping jaws (E, F) is connected at least partially fixedly to the housing (A).

8. Apparatus according to Claim 7, **characterized in that** a second clamping jaw (F) of the clamping jaws (E, F) can be displaced in a first direction perpendicularly with respect to the first clamping jaw (E).

9. Apparatus according to one of Claims 2 to 8, **characterized in that** the clamping jaws (F) or parts (13) of the clamping jaws (E) are at least partially exchangeable.

10. Apparatus according to either of Claims 8 and 9, **characterized in that** the second clamping jaw (F) is attached to a first end of a spindle (B).

11. Apparatus according to Claim 10, **characterized in that** the spindle (B) is mounted rotatably and can be displaced by axial rotation in the first direction.

12. Apparatus according to Claim 10 or 11, **characterized in that** a fork (C) is attached to the second end of the spindle (B).

13. Apparatus according to Claim 12, **characterized in that** the handle (D) for releasing or tightening the fixing means (B, C, D, E, F) is attached to the fork (C).

14. Apparatus according to Claim 13, **characterized in that** the apparatus comprises a hollow profile piece which can be plugged onto the housing (A) and receives the handle (D) completely in the completely mounted state of the apparatus.

15. Apparatus according to Claim 14, **characterized in that** the handle (D), the fork (C) and/or the spindle (B) are/is received non-rotatably in the hollow profile piece in the completely mounted state of the apparatus.

## Revendications

1. Dispositif de transport de charges sur des véhicules munis d'accouplements à tête sphérique,
- comprenant un boîtier (A) dans lequel peut être accueillie la tête sphérique de l'accouplement à tête sphérique,
- comprenant un moyen de serrage (B, C, D, E, F) avec lequel le dispositif peut être serré à la tête sphérique,
**caractérisé en ce que**
- le moyen de serrage (B, C, D, E, F) comprend une poignée (D) pour serrer ou desserrer le moyen de serrage (B, C, D, E, F), laquelle est inaccessible lorsque le dispositif est entièrement monté, ce qui garantit ainsi un desserrage involontaire.

2. Dispositif selon la revendication 1, **caractérisé en ce que** le moyen de serrage (B, C, D, E, F) présente au moins deux mâchoires de serrage (E, F) qui présentent respectivement un creux adapté à la forme de la tête sphérique.

3. Dispositif selon la revendication 1 ou 2, **caractérisé en ce que** le boîtier (A) recouvre la tête sphérique lorsque le dispositif est monté.

4. Dispositif selon l'une des revendications 1 à 3, **caractérisé en ce que** le dispositif présente des vis de réglage pour régler l'orientation du dispositif par rapport au véhicule.

5. Dispositif selon la revendication 4, **caractérisé en ce que** l'inclinaison du dispositif par rapport à un plan horizontal du véhicule peut être réglée avec une des vis de réglage.

6. Dispositif selon la revendication 4 ou 5, **caractérisé en ce que** l'orientation du dispositif par rapport au sens de déplacement du véhicule peut être réglée avec une ou deux des vis de réglage.

7. Dispositif selon la revendication 2, **caractérisé en ce qu'**une première mâchoire de serrage (E) des mâchoires de serrage (E, F) est au moins partiellement fixée à demeure au boîtier (A).

8. Dispositif selon la revendication 7, **caractérisé en ce qu'**une deuxième mâchoire de serrage (F) des mâchoires de serrage (E, F) peut être déplacée dans une première direction perpendiculairement à la première mâchoire de serrage (E).

9. Dispositif selon l'une des revendications 2 à 8, **caractérisé en ce que** les mâchoires de serrage (F) ou des parties (13) des mâchoires de serrage (E) peuvent au moins partiellement être remplacées.

10. Dispositif selon l'une des revendications 8 ou 9, **caractérisé en ce que** la deuxième mâchoire de serrage (F) est montée sur une première extrémité d'une broche (B).

11. Dispositif selon la revendication 10, **caractérisé en ce que** la broche (B) est montée de manière à pouvoir pivoter et peut être déplacée dans la première direction par une rotation axiale.

12. Dispositif selon la revendication 10 ou 11, **caractérisé en ce qu'**une fourche (C) est montée sur la deuxième extrémité de la broche (B).

13. Dispositif selon la revendication 12, **caractérisé en ce que** la poignée (D) destinée à serrer ou à desserrer le moyen de serrage (B, C, D, E, F) est montée sur la fourche (C).

14. Dispositif selon la revendication 13, **caractérisé en ce que** le dispositif comprend un élément à profilé creux pouvant être enfiché sur le boîtier (A), lequel reçoit entièrement la poignée (D) lorsque le dispositif est entièrement monté.

15. Dispositif selon la revendication 14, **caractérisé en ce que** la poignée (D), la fourche (C) et/ou la broche (B) sont reçues dans l'élément à profilé creux de manière à ne pas pouvoir tourner lorsque le dispositif est entièrement monté.
